# EUROPEAN PATENT APPLICATION

(11) **EP 3 151 002 A1**
(43) Date of publication of application: **05.04.2017**
(21) Application number: 15188223.0
(22) Date of filing: 02.10.2015
(51) Int. Cl.: G01N 29/07, G01N 29/09

(54) **A METHOD FOR DETERMINING AND/OR TRACKING THE SPATIAL DISTRIBUTION OF AN ACOUSTIC IMPEDANCE WITHIN A GIVEN VOLUME OF WATER**

(71) Applicant: Technische Universität München, 80333 München (DE)
(72) Inventor: RUTSCHMANN, Peter, DE-82031 Grünwald (DE); SCHÄFER, Stefan, DE-80636 München (DE); GROßE, Christian, DE-82140 Olching (DE)
(74) Representative: FDST Patentanwälte

(57) **Abstract**

The invention discloses a method for determining and/or tracking the spatial distribution of an acoustic impedance within a given volume of water, wherein during an individual detection cycle, at least one of a plurality of sound generators distributed within the volume of water, emits a sound signal pulse at a specific emission time each sound signal pulse is transmitted through the volume of water and is received after its transmission by at least one of a plurality of sound receivers distributed within the volume of water, each of said sound receivers generating an output signal, and a time-resolved response function to the emitted signal pulses is derived from the output signals generated by the sound receivers, the spatial resolution of the response function being given by the distribution of the said sound receivers. Furthermore, the response function is evaluated, taking into account the emission time of each sound signal pulse, in order to determine the position within the volume of water of at least one of an object, a suspension and a fluid, said object, suspension and/or fluid having an acoustic impedance different than the water in the volume of water.

## Description

The invention relates to a method for determining and/or tracking the spatial distribution of an acoustic impedance within a given volume of water. The invention further relates to an apparatus configured to determine and/or to track the spatial distribution of an acoustic impedance within a given volume of water.

In rivers and lakes there is missing observation of e.g. fish, bedload transport, floating material etc. due to missing observation methods. Especially at hydropower plants in rivers which are used for hydroelectric energy generation, at times there exists a logical need for observing objects and its trajectories within a given volume of water. In order to prevent floating logs or debris in the river from entering into the water turbines of a hydroelectric power plant, the water turbines typically are protected by trash racks or web like structures or devices. The meshgrids of these webs or racks, however, also prevent fish in the river from passing the power plant. On the one hand, this can be seen as an additional yet dangerous mechanical protection for the fish from getting hashed in a water turbine, on the other hand this inhibits the movement of the fish which, either for nutrition or for spawning, need to be able to travel along the river without major barriers.

Hydropower plants or intakes of thermal power plants are combined with weir or weir-like structures which usually impound the upstream water but at the same time allow for higher through-flows in times of floods by raising gates or similar devices. Weirs are subject to clogging by floating logs, floating debris or excessive reservoir sedimentation due to bedload transport bearing a high risk for e.g. nuclear plants. Therefore, monitoring and recognition of dangerous states seems vital in order to take early actions.

The problem of upstream fish migration is usually dealt with by a so-called "fish ladder" or "fishway" arranged close to the dam of the hydroelectric power plant. A fishway is some sort of a specifically designed bypass of the river connecting the two river parts upstream and downstream of the dam. Depending on the height difference to be overcome by the fishway and on the local topography surrounding the dam, the fishway may comprise several separate steps which compose the whole height difference. However the downstream migration of fish is still not satisfactorily solved and solution for existing powerplants or conventional hydropower designs are not available. In the Water Framework Directive (2000/60/EC) the European Union has addressed the issue of migration of fish in hydroelectrically exploited rivers by demanding free passage of fish and aquatic animals in both the upstream and downstream direction. In many rivers solutions for the downstream migration of aquatic animals at existing powerplants will be very difficult if not impossible. Usually fish are protected by fine trash racks from entering into the turbine and are then guided to some sort of bypass system, which connects the upstream and downstream section of the river. For effective protection the trash racks however should be very fine and therefore they are subject to clogging by leaves, floating debris etc. which will make hydropower production impossible in times of high floating debris transport. Permanent and not dynamically changing devices will be unable to work in such situations. Therefore, the solution of the future to overcome such difficulties will be a combination of observation and apropriate, situational management.

Due to the fact that most water passes through the turbine and only a very minor percentage through said fish ladders or fishways, aquatic animals will often not recognize the fish ladders or the fishways due to the competing flow to the turbines. Thus, in order to assure the proper functioning of bypass structures for downstream migration of fish and aquatic species or to assure the upstream migration of these in fishways , it is beneficial to observe the movement of fish in the upstream section and close to the turbine intakes and/or within the fishway and/or in the regions/sections of the river adjacent to the fishway and to actively influence their save passage by changing the distribution of water discharges between the turbines and the bypass structures or eventually by closing one or several turbines completely. In a similar way necessary counteractions could be taken in order to prevent clogging of a weir bay by floating logs or to prevent a complete obstruction of intakes by a combination of floating logs, floating debries and sediments. As the water can be very murky due to suspended solids, in many cases an optical observation, e.g. via a camara, may not lead to satisfactory observation results. Since fish are cold-blooded animals, an optical observation in the IR frequency range would likewise lack of sufficient contrast. Radio frequency based measurements, as they are used for the study of movements of whales in the ocean, typically require the implantation of a marker tag into each aquatic animal to be tracked, which does not seem feasible for tracking of smaller fish in a river.

An approach sometimes applied to localize fish is the usage of an echo sounder system. A set of sound generators is disposed in a defined region/section of water, emitting ultrasonic signals whose echo reflexion on the fish is detected by a set of sound receivers. In order to obtain a high detection efficiency, one needs a high degree of sound power reflected by the fish, which for limitations of the total sound power to be generated can only be achieved by confining the emitted sound of each sound generator into a rather narrow beam. For a high resolution, a large set of sound generators and detectors is required. However, due to the narrow beams a full spatial covering of a larger volume of water is too demanding and costly, so a true tracking is not really feasible yet.

One object of the invention is to provide a method for determining and/or tracking the position of an object within a given volume of water without the requirement of any physical tag disposed on the object, while the feasibility of determining and/or tracking the position of the object shall neither depend on the water conditions nor on properties of the object itself, other than its size. A further object of the invention is to provide an apparatus which is disposed and configured to perform said method.

According to the invention, the first object is achieved by a method for determining and/or tracking the spatial distribution of an acoustic impedance within a given volume of water, wherein during an individual detection cycle, the following steps are performed: at least one of a plurality of sound generators distributed within the volume of water emits a sound signal pulse at a specific emission time, each sound signal pulse is transmitted through the volume of water and is received after its transmission by at least one of a plurality of sound receivers distributed within the volume of water, each of said sound receivers generating an output signal, and a time-resolved response function to the emitted signal pulses is derived from the output signals generated by the sound receivers, the spatial resolution of the response function being given by the distribution of said sound receivers. Furthermore, the response function is evaluated, taking into account the emission time of each sound signal pulse, in order to determine the position within the volume of water of at least one of an object, a suspension and a fluid, said object, suspension and/or fluid having an acoustic impedance that is different from the acoustic impedance of the water within the volume of water. Advantageous embodiments which may involve an inventive step on their own are given in the dependent claims and in the description below.

The acoustic impedance is defined as the ratio of an acoustic pressure to the corresponding acoustic volume flow. A given medium has a high acoustic impedance, if a high sound pressure is required to achieve a certain acoustic volume flow, i. e., a physical movement of elementary units in the medium.

The notion of an acoustic impedance different than that of the water within the volume of water in particular means that an object, suspension and/or fluid located within the volume of water has an acoustic impedance which differs sufficiently from the acoustic impedance of the water within the volume of water such that a corresponding difference can be detected by the means involved to perform the method. The object may be organic, such as an aquatic animal like a fish or a drifting piece from a plant. The object may also be non-organic, such as a metal piece of waste.

Preferably, the sound generators are distributed within the volume of water in such a way that their spatial emission characteristics altogether provide a full covering of the volume of water. To this end, it is of particular advantage if each of said sound generators shows an emission beam as broad as possible given the constraints on its amplitude and frequency performances. The emission beam is defined by the spatial distribution of the emitted sound power to a given sound signal pulse, normalized to the total sound power emitted, and may be frequency dependent.

Preferably, for an individual detection cycle the specific emission times are chosen such that a plurality or all of the sound generators emit a sound signal pulse one after another, wherein the individual sound signal pulses may have a short timelag between each other or may be emitted subsequently without any substantial delay between each other. Preferably, the sound signal pulses are emitted in a pattern such that one sound signal pulse whose emission has already finished but whose transmission through the volume of water is still in progress, does not interfere with following sound signal pulses being emitted during this time. To this end, when placing the sound generators and setting up an emission pattern for the sound signal pulses, the sound velocity and the desired sound signal pulse duration are preferably taken into account.

Likewise, it is advantageous if the sound receivers provide a spatial distribution as homogeneous as possible throughout the limits of the entire volume of water. I.e., the volume of water may be a defined region/section within the water confined between the surface and the ground of a river, a lake or a part of open sea. Preferably, the sound receivers are placed at similar or equal next-neighbor-distances along the defined limits, and particularly along the ground and/or along the surface of the water. For placing a sound receiver at the surface or at a certain depth below a certain point of the surface, a buoy and/or an anchor in combination with a rope may be used. Depending on the geometry of the volume of water, one or more of the sound receivers may be "muted" in the sense that the generated output signal is constantly set to zero.

During an individual detection cycle, the sound generators emit a pattern of sound signal pulses. Preferably, the duration of a detection cycle - and thus, the duration of all of the sound signal pulses during this detection cycle - is chosen short enough such that the situation within the volume of water can be assumed as stationary, i.e., any movement of an object, a suspension and/or a fluid within the volume of water can be assumed as negligible in the scaling of the spatial resolution. For example, if an object whose position is to be determined is a fish and fifteen sound generators are used with a sound pulse duration of 2 ms each, the total pulse emission time of a single detection cycle is 30 ms. During such a short time interval, the fish can be assumed as stationary or in other words as not moving.

The sound signal pulses are then transmitted through the volume of water and the presence and position of an object, a suspension and/or a fluid can in principle be recognized from the output signals of the sound receivers if its acoustic impedance is different from the acoustic impedance of the water within the volume of water. To this end, a response function is derived from the output signals of the sound receivers, the response function showing the acoustic response to all of the sound signal pulses of the pattern of sound signal pulses at all of the sound receivers involved.

Using the knowledge of the specific emission time of each of the sound signal pulses during an individual detection cycle as well as the geometrical information about the distribution of the sound generators and the sound receivers, the response function can be evaluated by tomographic methods, e.g., by applying an inverse Radon transformation to the response function or to a function derived from the response function.

In particular, each position of a plurality of objects at a time, e.g. fish in a swarm, can be determined by evaluating the response function derived from the output signals accordingly. As a fish shows an acoustic impedance different than water, a swarm of fish leads to an output signal of a sound receiver which should differ from an expected output signal to the same emitted sound signal pulse when no object is present within the volume of water. The spatial resolution of the setup of sound generators and sound receivers can be adjusted in a way such that individual fish may be localized by evaluating the response function.

Likewise, the positions of other objects than aquatic animals, e.g. of floating debris, may be determined. As floating debris or floating logs in a river might damage or even destroy a water turbine of a hydroelectric power plant, trash racks or weblike devices are used for protecting the water turbines of a power plant. However, these trash racks may be blocked by such floating debris or by a mixture of floating debris, floating logs and larger sediment boulders. If there is a downstream or upstream bypass structure to enhance fish migration, however, floating debris might enter such bypass structures, leading to blockage or even damage. Thus, floating debris shall be prevented from entering or blocking the bypass structures. At the intakes to the turbines this may be cumbersome, especially due to strong water currents in that area of the river. Thus, it is useful to try to remove larger debris from the river as early as possible, for which it is useful to detect and classify individual pieces of e.g. floating logs as soon as possible when approaching an intake and/or a bypass structure.

Furthermore, also the presence and position of a suspension of solids and/or a fluid may be detected by evaluating the response function. As a fluid, e.g. water with an oxygen content that is different to the oxygen content of the water within the volume of water may be comprised. The oxygen content of water conditions its acoustic transmissional behavior, as sound waves within water may get refracted at small oxygen bubbles. Preferably, a plurality of sound signal pulses with varying wavelengths may be used. Therefore, in localizing the position of a suspension of solids or of water with different oxygen content, streams of confluence can be analyzed by evaluating the response function accordingly. In particular, the localization of the position of a suspension of solids or of water with different oxygen content may be understood as determining the region within the volume of water where a substantial concentration of the suspension or of the fluid within the volume of water can be detected.

In a preferred embodiment, a reference response function is defined that corresponds to a situation in which no object, suspension and/or fluid having an acoustic impedance different than the water within the volume of water is present within the volume of water, and the response function is evaluated taking further into account the reference response function in order to determine the position within the volume of water of at least one of an object, a suspension and a fluid. Said reference response function can then be seen as the expected response function which would be obtained by a process comprising the emission of sound signal pulses of an individual detection cycle, their transmission through the water without any object, suspension and/or fluid having an acoustic impedance different than the water, their reception by the sound receivers and the corresponding generation of output signals by the sound receivers.

In order to evaluate the response function of a specific individual detection cycle according to the method, it is useful to take into account a reference response function, as the spatial distribution of an acoustic impedance can be derived from the contrast of the acoustic impedance present in the detection cycle's response function with respect to the reference response function. This contrast is easily calculated as a mere difference in the corresponding variables such as time-lag, sound pressure and/or frequency spectrum. A function displaying the contrast of the acoustic impedance is preferably treated using tomographic methods such as, e.g., an inverse Radon transformation or an algebraic reconstruction technique, in order to obtain the spatial distribution of the contrast of the acoustic impedance within the volume of water, i.e., the spatial distribution of a medium having a different acoustic impedance than the water within the volume of water. Likewise, diffraction information can be used in order to perform a diffraction tomography for obtaining the spatial distribution of the contrast of the acoustic impedance. From this spatial distribution, the position of an object, a suspension and/or a fluid can be inferred, said object, suspension and/or fluid having an acoustic impedance different than the water within the volume of water.

In another preferred embodiment, the volume of water is prepared in a reference condition such that no object, suspension and/or fluid having an acoustic impedance different than the water within the volume of water is present, wherein during a reference detection cycle at least one sound signal pulse is emitted and transmitted through the volume of water prepared in the reference condition, and received by at least one of the plurality of sound receivers after its transmission, each of said sound receivers generating a reference output signal, and wherein the reference response function is defined as the response function derived from the reference output signals.

Defining the reference response function via a detection during a reference detection cycle as described above has an additional pay-off of taking into account influences of possible sound reflections at physical boundaries of the volume of water or surrounding the volume of water. Such physical boundaries may comprise a water surface, grounds, walls and/or rocks. Possible reflections of the sound signal pulses at such physical boundaries may have an impact on the output signals generated by the receivers, especially if the reflecting physical boundaries do not provide a smooth surface, like rocks on the ground of a lake or a river. To this end, taking into account realistic reflections by means of a reference response function derived from a reference detection cycle, has a higher reliability than calculating or inferring a reference response function from geometrical considerations of the physical boundaries. Thus, even though the preparation of reference conditions within the volume of water may imply an effort, the overall resolution and reliability of the method can be increased. The reference response function may also be derived from a plurality of reference detection cycles by an average or a weighted average of the response functions obtained from each of the reference detection cycles.

In yet another preferred embodiment, the response function is evaluated taking further into account deviations from the reference response function in at least one of the variables time lag, amplitude and frequency spectrum in order to determine the position within the volume of water of said object, suspension and/or fluid having an acoustic impedance different than the water within the volume of water. The time lag is preferably defined as the delay between the emission time of a sound signal pulse and the moment of its reception by a sound receiver.

As sound waves of a sound signal pulse get diffracted around an object present within the volume of water, an increase of the time lag as compared to the reference detection cycle can be observed at sound receivers whose sound path from the emitting sound generator gets affected by the object. The amount of increase may scale with the size of the diffracting object. Likewise, an object may shadow or even absorb sound pressure, leading to reduced amplitudes in certain output signals as compared to the reference detection cycle. The number of affected output signals and the amount of reduction of the corresponding amplitudes of the output signals may scale with the size of the shadowing or absorbing object. Furthermore, an object may show a frequency-dependent attenuation, i.e., in comparison to the reference response function, in certain output signals amplitudes at some frequencies are more attenuated. A frequency dispersion might be detectable in the output signals.

An attenuation of amplitudes and/or a frequency dependence of amplitudes in certain output signals - with respect to the reference response function - may also hold for a suspension and/or a fluid. Furthermore, an attenuation of amplitudes and/or a frequency dependence of amplitudes in certain output signals may help to gain information about a material or even a type of an object. The amount of attenuation may yield information about the density of the object, while the frequency spectrum of the absorption or a dispersion may convey information on its composition.

The position of an object, a suspension and/or a fluid may be inferred from the fact that given said position, a sound signal pulse emitted from a specific sound generator has a well defined sound path to each of the sound receivers. Some of the output signals may not be affected, if the position to be determined does not interfere with the corresponding sound paths. In case a sound path is affected by the object, the suspension and/or the fluid, the output signal of the corresponding sound receiver will show changes in the cited variables as compared to the reference detection cycle. From the amounts of the changes and taking into account all the sound signal pulses and thus, the whole response function, the position may be determined.

In yet another preferred embodiment, the response function is evaluated in order to further determine the size of said object, suspension and/or fluid. The "size" of a suspension or a fluid is to be understood as the spatial distribution of a substantial concentration of the suspension or the fluid within the volume of water. Preferably, the size is determined taking into account an amount of deviation of a set of variables in the response function with respect to the reference response function. E.g., a larger object may lead to a higher delay in the time lag, since a diffracted sound wave has a larger obstacle in its sound path towards a sound receiver.

In yet another preferred embodiment, the instantaneous position within the volume of water of said object, suspension and/or fluid is determined for a plurality of individual detection cycles, wherein a trajectory within the volume of water of said object, suspension and/or fluid is derived from the set of instantaneous positions within the volume of water. Preferably, the positions are to be determined for subsequent individual detection cycles. Often not only an instantaneous position is of interest, but also a trajectory, e.g., for the study of movements of objects in a vortex or for observing movements of aquatic animals.

In yet another preferred embodiment, the response function to a given individual detection cycle is evaluated in order to determine at least one of the instantaneous position within the volume of water and the size of each one of a set of aquatic animals. The set of aquatic animals may comprise one or more fish or other animals, wherein the animals may be from the same swarm or species or of different nature. Determining the instantaneous position of fish with a high accuracy gives the possibility to count them and to study their movements, which both are important tasks in research. In particular, one may select the set of aquatic animals such that from all aquatic animals present within the volume of water and detectable within the resolution of the method, only the position and/or the size of each of a subset are to be determined.

In order to determine an instantaneous position of a fish, however, current state of the art methods typically have limitations on their application. Optical detection methods using light in the visible range, e.g., by means of a standard camera, are not really feasible in murky waters due to the low visibility and contrast. Many rivers, however, show such a low visibility. As aquatic animals are cold-blooded, an optical detection using IR frequencies, i.e. tracking heat differences, may not show sufficient contrast in the detection signals.

Radio frequency detection typically requires a tag attached to the object to be detected, so this method may be applied for tracking large aquatic animals like whales, but is too difficult to be implemented for tracking smaller fish in a river. Detection based on acoustic reflection such as echo sounders have the problem that the resolution depends on the reflected sound power, which in turn depends on the reflecting surface. This may be feasible to detect a whole swarm of fish-with an integration over lot of small reflecting surfaces given by the fish - for fishing purposes, but may not lead to a satisfactory resolution when tracking individual aquatic animals.

Thus, the method is a very useful tool for individually localizing aquatic animals within a volume of water, even if they are relatively small. Furthermore, for localizing fish, a biological side-effect of the transmission of the sound waves of the sound signal pulses used in the method can be exploited: the contrast of the acoustic impedance can be increased at certain wavelengths as sound waves which do not get diffracted around a fish's body but propagate through it, will experience an increase in the time lag due to the fact that these sound waves will propagate also through the swim bladder of the fish. As the swim bladder is filled with air, the sound waves propagate through it at the sound velocity in the air, while the rest of the fish's body has a sound velocity similar to water. This time lag due to the lower sound velocity in the swim bladder of the fish can be used for localizing the fish. Furthermore, knowledge on the size of an aquatic animal may contribute to its biological classification, e.g., to determine the species or genus.

In yet another preferred embodiment, the instantaneous position within the volume of water of each one of a set of aquatic animals is determined for a plurality of individual detection cycles, and a trajectory within the volume of water of each of said aquatic animals is derived from the set of instantaneous positions within the volume of water. Preferably, the instantaneous positions within the volume of water are to be determined for subsequent individual detection cycles. The trajectory of each of the set of aquatic animals is the sequence of its determined instantaneous positions. Preferably, the individual detection cycles have a duration that is sufficiently short such that the movement of an aquatic animal can be assumed as stationary during the individual detection cycle. The knowledge of a trajectory of an aquatic animal may help to infer its family, genus or even species due to characteristic movements, which may be caused either by behavioural patterns or by physiological reasons.

In yet another advantageous embodiment, a phase of a movement of each of said aquatic animals is determined for a plurality of individual detection cycles. Particularly, a phase of a movement may be understood as the relative position of different parts of an aquatic animal's body, e.g., the position of a fish's tail fin with respect to its head or the rest of its body. The knowledge of phases of movement of an aquatic animal may convey information about characteristic movements which may support biological classification.

In a further advantageous embodiment, for each aquatic animal of at least a subset of said set of aquatic animals, information about its biological classification is derived taking into account at least one of its size, its trajectory and its phases of movement. Information about the biological classification of an aquatic animal may comprise its family, genus and/or species. The biological classification of aquatic animals is an important topic in research, but has also implications for maintaining a biological equilibrium, e.g., in order to see whether sufficient members of a swarm are travelling to a spawning place, individual members of the swarm need to be detected, identified and tracked.

In yet another preferred embodiment, for at least one piece of floating debris within the volume of water, at least one of an instantaneous position within the volume of water, a trajectory within the volume of water, a size, and a type is determined. The detection of floating debris can be useful in the vicinity of fishways, e. g., close to hydroelectric power plants or other dams. In order to be able to remove floating debris, information about its position, about its trajectory and/or size to infer its inertia and/or weight, and/or about its type - i.e., whether it is organic or may contain contamination - is useful.

In another preferred embodiment, for a fluid distinct from the water within the volume of water, at least one of an instantaneous position within the volume of water, a trajectory within the volume of water, a spatial distribution, and a type is determined. The detection of a fluid within a volume of water, wherein the fluid is distinct from the water within the volume of water, may be helpful for studying the currents at a confluence. To this end, a comprehensive spatial information about where the fluid to be tracked is present in a considerable concentration is useful. As a type of a fluid, its concentration and/or composition information is comprised.

According to the invention, the second object is achieved by an apparatus for determining and/or tracking the spatial distribution of an acoustic impedance within a given volume of water, said apparatus comprising a plurality of sound generators, each of said sound generators being configured to emit a sound signal pulse within a volume of water, a plurality of sound receivers, each of said sound receivers being configured to receive a sound signal pulse within a volume of water and to generate a corresponding output signal, and a control unit being in connection to each of said sound generators and to each of said sound receivers, said control unit being configured to carry out the method described above, said control unit comprising a processor or being in connection to a processor, said processor being configured to derive a set of response functions from the output signals, and configured to evaluate the set of response functions in order to determine and/or to track the spatial distribution of an acoustic impedance. The advantages of the method and its embodiments can be transferred to the apparatus, analogously. Preferably, each of the sound receivers is given by a hydrophone.

In particular, the sound generators and the sound receivers may be placed within the volume of water pairwise at a set of signal spots in a way such that at each signal spot, one sound generator and one sound receiver are located. To this end, the use of sound devices with an active and a passive operation mode is advantageous, i.e., a sound device that acts as a sound generator in the active operation mode and as a sound receiver in the passive operation mode. In this case, such a sound device is located at each signal spot, which may reduce the complexity of the apparatus. The processor may be integrated into the control unit or may be in connection to the control unit in the sense that a signal emitted by the control unit can serve as an input to the processor.

In a preferred embodiment of the apparatus, each of at least a subset of said sound receivers is given by an optical microphone. Preferably, all sound receivers are given as optical microphones. In an optical microphone, the changes of pressure caused by sound are translated into an output signal by means of interferometry, e.g. based on a Fabry-Pérot-Etalon principle. This can be done by letting the sound pressure directly act on a membrane whose sound-induced vibrations are detected with an interferometer, or by the changes of the refractive index of air due to the sound-induced pressure changes. These changes of the refractive index of air within a specially designed sound chamber of the optical microphone can be measured via an interferometer. The advantages of this approach are the high sensibility and signal-to-noise-ratio also at low sound pressures as well as the very linear frequency response, particularly in the ultrasonic range, which makes complicated calibrations to the sound signals used in the method dispensable.

The invention further comprises and discloses a computer program product, configured to evaluate when being executed by a processor: a set of response functions, each of said response functions corresponding to at least one of a plurality of emitted sound signal pulses and derived during a process given by a method as described above, in order to determine at least one of an instantaneous position within a volume of water, a trajectory within a volume of water, a size, and a type of at least one of an object, a suspension and a fluid, said object, suspension and/or fluid having an acoustic impedance different than the water within the volume of water. The advantages of the method and its embodiments can be transferred to the computer program, as the evaluation of a response function forms an ingredient of the method.

The attributes and properties as well as the advantages of the invention which have been described above are now illustrated with help of drawings of an embodiment example, where
- Fig. 1a: schematically shows, a first sound generator emitting a first sound signal pulse and its transmission to a plurality of sound receivers within a volume of water,
- Fig. 1b: schematically shows a second sound generator emitting a second sound signal pulse and its transmission to the sound receivers of Fig. 1 a within a volume of water,
- Fig. 2: schematically the origin of a delay in a time lag of the first sound signal pulse caused by a fish in the situation of Fig. 1a, and
- Fig. 3: a flow chart of a method for determining and/or tracking objects such as aquatic animals within a given volume of water.

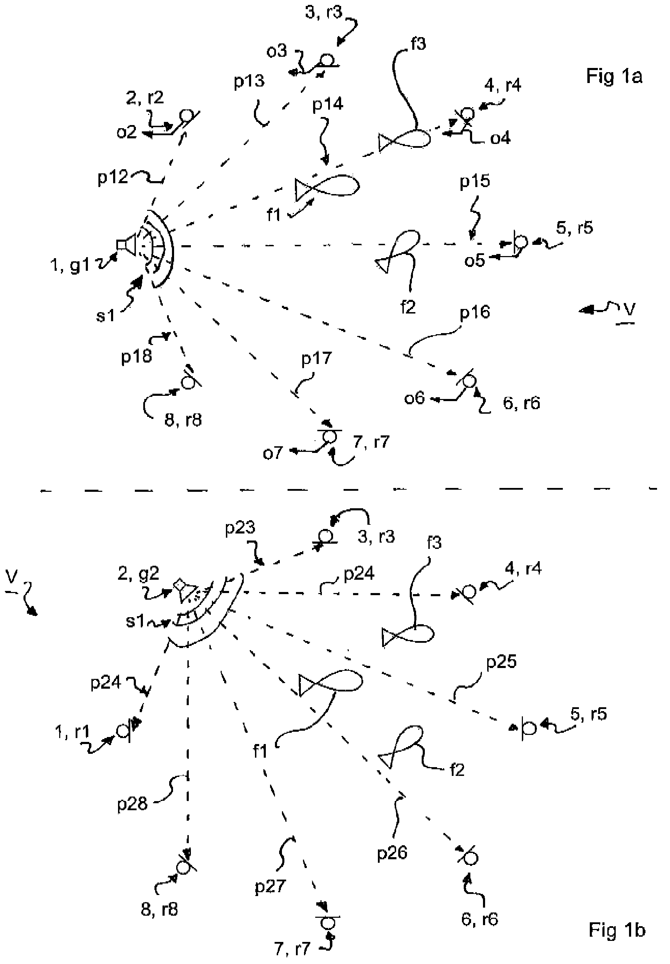

Fig. 1 a schematically shows a volume of water V, within which a set of sound generators g1 and a set of sound receivers r2 to r8 are located at signal spots 1 to 8. The first sound generator g1 at signal spot 1 is emitting a first sound signal pulse s1, while the other sound generators at the other signal spots 2 to 8 are inactive, and thus are not indicated in Fig. 1 a. The first sound signal pulse s1 emitted by the first sound generator g1 is transmitted through the water of the volume of water V, and propagates towards the sound receivers r2 to r8 along sound paths p12 to p18. Upon reception, each of the receivers r2 to r8 generates an output signal o2 to o8, respectively. The output signals o2 to o8 are transmitted electronically to a control unit not shown in Fig. 1 a for signal processing.

Within the volume of water V, three objects given by a first fish f1, a second fish f2 and a third fish f3 are present. The sound paths p12, p13, p16, p17 and p18 are not affected by the presence of the fish f1, f2, f3, and accordingly, the first sound signal pulse s1 can propagate to the sound receivers r2, r3, r6, r7 and r8 as if the fish would not be present. Thus, in the corresponding output signals o2, o3, o6, o7 and o8, no signal components can be found from which a presence of the fish f1, f2, f3 could be detected. The situation is different, however, for the sound paths p14 and p15, leading from the first sound generator g1 to the receivers r4 and r5, respectively. The first fish f1 and the third fish f3 in the sound path p14 delay the first sound signal pulse s1, such that in the corresponding output signal o4, the first sound signal pulse s1 is represented slightly later than it would be without the presence of the first fish f1 and the third fish f3. Likewise, the second fish f2 delays the first sound signal pulse s1 in the sound path p15, said delay entering into the output signal o5. Furthermore, the fish f1, f2, f3 not only delay the first sound signal pulse s1 with respect to the situation when no fish are present, but also absorb some of the first sound signal pulse's s1 sound pressure, leading to an attenuated amplitude in the output signals o4 and o5.

In Fig. 1b, the same situation as in Fig. 1 a is shown just immediately after finishing the emission of the first sound signal pulse s1. Now, at signal spot 1, a receiver r1 gets active, while at signal spot 2 the receiver r2 switches to inactive, and a second sound generator g2 emits a second sound signal pulse s2. The duration of the first and the second sound signal pulses s1, s2 is preferably in the range of 1 to 5 ms, respectively, such that the movement of the fish f1, f2, f3 can be neglected for the time all sound generators at all signal spots 1 to 8 have emitted one sound signal pulse each.

Like in the situation displayed in Fig. 1a, the second sound signal s2 gets transmitted through the volume of water V and propagates towards the receivers r1, r3 to r8 along sound paths r21, r23 to r28. This time, as the sound path p24 is no longer affected by the presence of the third fish f3, the output signal o4 generated from the receiver r4 will not show any difference to a situation without any fish f1, f2, f3 present. The first fish f1 now might interfere with the sound paths p25 and p26 extending from the second sound generator g2 towards the receivers r5 and r6, respectively. This might lead to a delay in the time lag and/or to an attenuation of the amplitude of the second sound signal pulse s2 in the output signals o5 and o6. The output signals o1, o3, o4, o7 and o8 are not affected.

In order to complete one full individual detection cycle, a sound signal pulse is emitted by a sound generator located at each of the remaining signal spots 3 to 8 in the way described for the first and the second sound signal pulses s1, s2. From the differences in the time lags and/or the attenuations of the amplitudes in the output signals o1 to o8 compared to a situation with no fish present in the volume of water V, the positions of the fish f1, f2 and f3 may be inferred using tomographic methods on a function derived from the output signals o1 to o8.

Note that in principle, the sound generators g1 to g8 and the sound receivers r1 to r8 need not be located pairwise at signal spots 1 to 8, neither they need to be equal in number. Also note that in principle, when located at the same signal spot, a sound generator and a sound receiver may be implemented by the same device, using a membrane which can generate a sound signal pulse from a generation signal (active operation) and generate an output signal from a received sound signal pulse (passive operation), so that such a device may switch between an active and a passive operation mode as needed by the method. However, in order to improve the performance, specially optimized sound generators and optical microphones as sound receivers may be used which do not provide an active/passive operation mode.

In the embodiment depicted in Fig 1 a and 1 b, a total of eight signal spots 1 to 8 is taken for illustration, but the performance and the resolution of the detection improves with the number of sound generators and sound receivers. In the embodiment shown in Fig 1 a and 1 b, the distribution of the sound generators g1, g2 and the sound receivers r1 to r8 is planar only for displaying purposes. It may be cylindrical or spherical, particularly depending on the volume of water and on the physical boundaries surrounding it, but also situations are conceivable where a planar distribution could be of advantage.

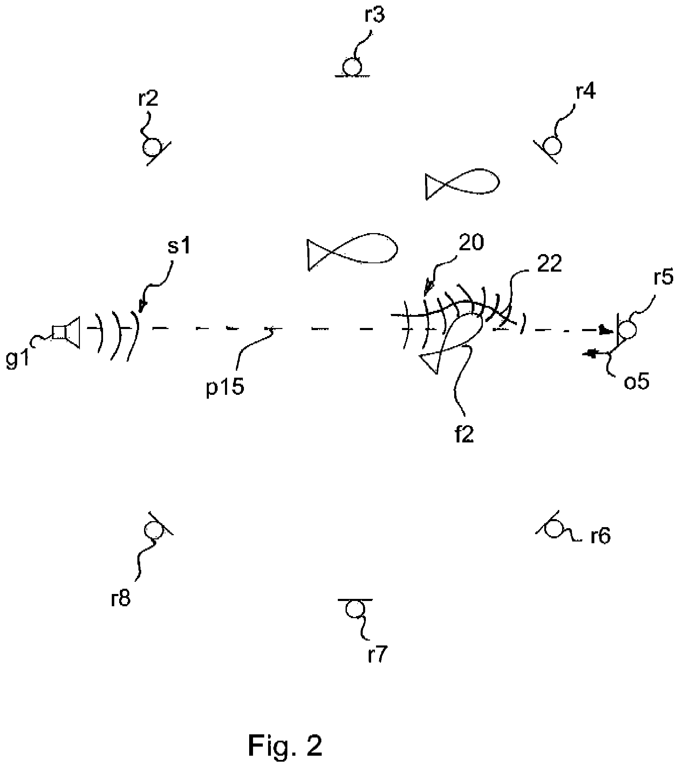

Fig. 2 schematically shows the situation of Fig. 1 a again, where the main focus is set on the sound path p15 along which the first sound signal pulse s1 propagates towards the sound receiver r5. As the second fish f2 states an obstacle in the sound path p15, for certain wavelengths the wave fronts 20 of the sound waves of the first sound signal pulse s1 get diffracted around the body of the second fish f2, leading effectively to a propagation along a longer propagation path 22. This longer propagation path 22 leads to a time delay of the first sound signal pulse s1 in the output signal o5 as compared to the situation without the presence of the second fish f2. Furthermore, a part of the sound pressure transmitted by the wave fronts 20 may be absorbed by the body of the second fish f2, so that the output signal o5 may not only show the first sound signal pulse s1 delayed, but also attenuated in amplitude.

Sound waves with smaller wavelengths may penetrate the body of the second fish f2 (not shown). As the body of a fish mainly consists of water, the sound velocity within a fish's body is not too different from the sound velocity in the water within the volume of water V. However, part of the sound waves propagating through the fish's body will also propagate through the swim bladder, which, since being filled with air, has a far lower sound velocity, thus also leading to a time delay.

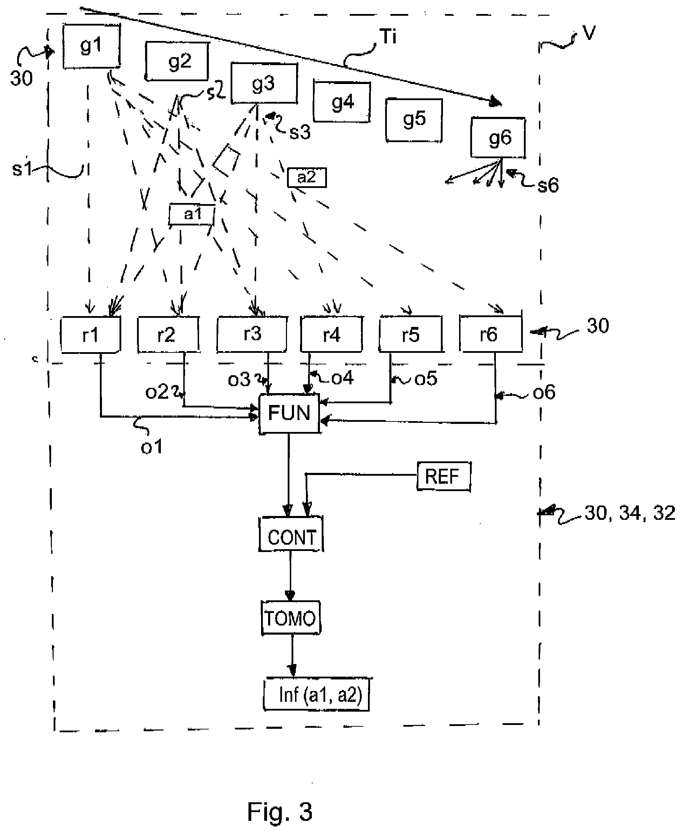

Fig. 3 shows a flow chart of a method for determining and/or tracking objects a1, a2 within a given volume of water V. The objects a1, a2 within the volume of water may be given by aquatic animals, in particular by vertebrates, such as fish, or may be given by other objects such as floating debris. For an individual detection cycle Ti, a set of sound generators g1 to g6 properly distributed within the volume of water V generates one after another a sound signal pulse s1 to s6, respectively, each of which is transmitted through the volume of water within which the objects a1, a2 are present. After their transmission through the volume of water (V) the sound signal pulses s1 to s6 are received by a set of sound receivers r1 to r6 properly distributed within the volume of water V. The sound generators g1 to g6 and the sound receivers r1 to r6 form part of an apparatus 30 adapted and configured to perform the method described above.

Each of the sound receivers r1 to r6 generates an output signal o1 to o6, respectively, which is electronically transmitted to a control unit 32 comprising a processor 34, the control unit 32 also being part of the apparatus 30. From this output signals o1 to o6, a response function FUN is derived, which contains all information about the acoustic response at all of the sound receivers r1 to r6 induced by all of the sound signal pulses s1 to s6. The response function FUN is compared to a reference response function REF, which represents the response function to an individual detection cycle where the volume of water has been prepared such that no object a1, a2 is present. The comparison may be performed by a termwise subtraction of the entries of the reference response function from the response function obtained from the individual detection cycle Ti. The result of the comparison is a contrast CONT of the acoustic impedance within the volume of water V, taken at the locations of the receivers r1 to r6. This contrast CONT can now be treated by tomographic means TOMO such as an inverse Radon transformation, in order to obtain the spatial distribution of the contrast of the acoustic impedance within the volume of water V. From this spatial distribution, informations INF (a1, a2) on the objects a1, a2 can be derived, such as the instantaneous position of the objects a1, a2, or their size, or whether they are organic. By determining the positions of the objects a1, a2 for a plurality of subsequent individual detection cycles Ti, also their trajectories can be obtained.

Even though the invention has been illustrated and described in detail with help of a preferred embodiment example, the invention is not restricted by this example. Other variations can be derived by a person skilled in the art without leaving the extent of protection of this invention.

### Reference numerals

- 1-8: signal spot
- 20: wave front
- 22: propagation path
- 30: apparatus
- 32: control unit
- 34: processor

- a1, a2: object
- f1, f2, f3: first, second and third fish
- g1 - g6: sound generator
- o1 - o8: output signal
- p12 - p28: sound path
- r1 - r8: sound receiver
- s1 - s6: sound signal pulse
- Ti: individual detection cycle
- V: volume of water

- CONT: acoustic impedance contrast function
- FUN: response function
- INF(aj): set of information on object aj; j = 1, 2
- REF: reference response function
- TOMO: tomographic means

## Claims

1. A method for determining and/or tracking the spatial distribution of an acoustic impedance within a given volume of water (V),
wherein during an individual detection cycle (Ti),
- at least one of a plurality of sound generators (g1-g6) distributed within the volume of water (V), emits a sound signal pulse (s1-s6) at a specific emission time,
- each sound signal pulse (s1-s6) is transmitted through the volume of water (V) and is received after its transmission by at least one of a plurality of sound receivers (r1-r8) distributed within the volume of water (V), each of said sound receivers (r1-r8) generating an output signal (o1-o8), and
- a time-resolved response function (FUN) to the emitted signal pulses (s1-s6) is derived from the output signals (o1-o8) generated by the sound receivers (r1-r8), the spatial resolution of the response function (FUN) being given by the distribution of said sound receivers (r1-r8),
and wherein the response function (FUN) is evaluated, taking into account the emission time of each sound signal pulse (s1-s6), in order to determine the position within the volume of water (V) of at least one of an object (a1, a2, f1-f3), a suspension and a fluid, said object (a1, a2, f1-f3), suspension and/or fluid having an acoustic impedance different than the water within the volume of water (V).

2. The method according to claim 1,
wherein a reference response function (REF) is defined that corresponds to a situation in which no object (a1, a2, f1-f3), suspension and/or fluid having an acoustic impedance different than the water within the volume of water is present within the volume of water (V), and
wherein the response function (FUN) is evaluated taking further into account the reference response function (REF) in order to determine the position within the volume of water (V) of at least one of an object (a1, a2, f1-f3), a suspension and a fluid.

3. The method according to claim 2,
wherein the volume of water (V) is prepared in a reference condition such that no object (a1, a2, f1-f3), suspension and/or fluid having an acoustic impedance different than the water within the volume of water (V) is present,
wherein during a reference detection cycle at least one sound signal pulse (s1-s6) is emitted and transmitted through the volume of water (V) prepared in the reference condition, and received by at least one of the plurality of sound receivers (r1-r8) after its transmission, each of said sound receivers (r1-r8) generating a reference output signal, and wherein the reference response function (REF) is defined as the response function derived from the reference output signals.

4. The method according to claim 2 or claim 3,
wherein the response function (FUN) is evaluated taking further into account deviations from the reference response function (REF) in at least one of the variables time lag, amplitude and frequency spectrum in order to determine the position within the volume of water (V) of said object (a1, a2, f1-f3), suspension and/or fluid having an acoustic impedance different than the water within the volume of water (V).

5. The method according to one of the preceding claims,
wherein the response function (FUN) is evaluated in order to further determine the size of said object (a1, a2, f1-f3), suspension and/or fluid.

6. The method according to one of the preceding claims,
wherein the instantaneous position within the volume of water (V) of said object (a1, a2, f1-f3), suspension and/or fluid is determined for a plurality of individual detection cycles (Ti), and
wherein a trajectory within the volume of water (V) of said object (a1, a2, f1-f3), suspension and/or fluid is derived from the set of instantaneous positions within the volume of water (V).

7. The method according to one of the preceding claims,
wherein the response function (FUN) to a given individual detection cycle (Ti) is evaluated in order to determine at least one of the instantaneous position within the volume of water and the size of each one of a set of aquatic animals (f1-f3).

8. The method according to claim 7,
wherein the instantaneous position within the volume of water (V) of each one of a set of aquatic animals (f1-f3) is determined for a plurality of individual detection cycles (Ti), and
wherein a trajectory within the volume of water (V) of each of said aquatic animals (f1-f3) is derived from the set of instantaneous positions within the volume of water (V).

9. The method according to claim 8,
wherein a phase of a movement of each of said aquatic animals (f1-f3) is determined for a plurality of individual detection cycles (Ti),.

10. The method according to one of claims 7 to 9,
wherein for each aquatic animal (f1-f3) of at least a subset of said set of aquatic animals (f1-f3), information about its biological classification is derived taking into account at least one of its size, its trajectory and its phases of movement.

11. The method according to one of the claims 1 to 6,
wherein for at least one piece of floating debris within the volume of water (V), at least one of an instantaneous position within the volume of water (V), a trajectory within the volume of water (V), a size, and a type is determined.

12. The method according to one of the claims 1 to 6,
wherein for a fluid distinct from the water within the volume of water (V), at least one of an instantaneous position within the volume of water (V), a trajectory within the volume of water (V), a spatial distribution, and a type is determined.

13. An apparatus (30) for determining and/or tracking the spatial distribution of an acoustic impedance within a given volume of water (V), said apparatus (30) comprising
- a plurality of sound generators (g1-g6), each of said sound generators (g1-g6) being configured to emit a sound signal pulse (s1-s6) within a volume of water (V),
- a plurality of sound receivers (r1-r8), each of said sound receivers (r1-r8) being configured to receive a sound signal pulse (s1-s6) within a volume of water (V) and to generate a corresponding output signal (o1-o8), and
- a control unit (32) being in connection to each of said sound generators (g1-g6) and to each of said sound receivers (r1-r8), said control unit (32) being configured to carry out the method according to one of the preceding claims, said control unit (32) comprising a processor (34) or being in connection to a processor (34), said processor (34) being configured to derive a set of response functions (FUN) from the output signals (o1-o8), and configured to evaluate the set of response functions (FUN) in order to determine and/or to track the spatial distribution of an acoustic impedance.

14. The apparatus according to claim 13,
wherein each of at least a subset of said sound receivers (r1-r8) is given by an optical microphone.

15. A computer program product, configured to evaluate when being executed by a processor (34):
a set of response functions (FUN), each of said response functions (FUN) corresponding to at least one of a plurality of emitted sound signal pulses (s1-s6) and derived during a process given by a method according to any of the claims 1 to 12,
in order to determine at least one of
an instantaneous position within a volume of water (V), a trajectory within a volume of water (V), a size, and a type of at least one of an object (a1, a2, f1-f3), a suspension and a fluid,
said object (a1, a2, f1-f3), suspension and/or fluid having an acoustic impedance different than the water within the volume of water (V).
